# EUROPEAN PATENT SPECIFICATION

(11) **EP 2 319 735 B1**
(45) Date of publication and mention of the grant of the patent: **30.01.2013**
(21) Application number: 09175221.2
(22) Date of filing: 06.11.2009
(51) Int. Cl.: B60R 21/34

(54) **Method and system to control release of a hinge for a vehicle bonnet**
Verfahren und System zur Steuerung der Freisetzung eines Scharniers für eine Fahrzeugmotorhaube
Procédé et système pour contrôler la libération d'une charnière du capot d'un véhicule

(43) Date of publication of application: 11.05.2011
(73) Proprietor: Volvo Car Corporation, 405 31 Göteborg (SE)
(72) Inventor: Erlingfors, Mats, 44465, Jörlanda (SE); Hallneus, Gunnar, 41671, Göteborg (SE); Fredriksson, Anders, 41467, Göteborg (SE)
(74) Representative: Widahl, Jenny Marie

(56) References cited:
- EP-A- 1 659 037
- WO-A-2005/044645
- GB-A- 2 387 581

## Description

The present invention relates to a method of providing a bonnet hinge mechanism for a deployable bonnet system in a vehicle allowing for lifting of the bonnet to increase deformation distance to engine bay components in case of a detected or predicted impact with a pedestrian in accordance with the preamble of claim 1.

The present invention also relates to a bonnet hinge mechanism for a deployable bonnet system in a vehicle allowing for lifting of the bonnet to increase deformation distance to engine bay components in case of a detected or predicted impact with a pedestrian in accordance with the preamble of claim 8.

### Background of the invention

It is known to use a deployable bonnet system in a vehicle that will lift the bonnet to increase deformation distance to engine bay components, and thereby improve energy absorption during a pedestrian impact on the bonnet, in order to reduce pedestrian injury.

The objective of raising the bonnet is to obtain a substantial reduction of the Head Injury Criterion (HlC) and force level with a deployable bonnet solution. The bonnet hinge needs to be equipped with added linkages and a release system in order to provide for the bonnet lifting functionality.

The release system will normally comprise a hinge piston locking together at least two hinge members in such a way that the hinge will be able to provide for lifting of the bonnet only as the hinge piston is removed by the release system upon pedestrian impact, thus releasing the previously locked together members such that they may move in relation to each other.

Manufacture of automotive vehicles are usually divided into three major areas, body in white (A-shop), surface treatment (B-shop) and assembly (C-shop). However, during manufacture of the vehicle, the release system cannot be assembled to the hinge mechanism in the factory A-shop or B-shop due to e.g. Electro-Deposited (ED) coating and paint oven.

Also, for reasons of production efficiency, quality assurance and manufacturing economics, body variants are not recommended in the factory A-shop or B-shop. Body variants in this case could be vehicles equipped with hinge systems providing for lifting of the bonnet and vehicles having hinges systems lacking this ability.

The normal procedure used today is thus to provide transport pistons, locking together the hinge members of the hinge systems providing for lifting of the bonnet during the ED-coating process and the body paint application process in the factory A- and B-shops. These transport pistons are demounted in the factory C-shop and exchanged for a release unit having an integrated hinge piston.

A previously known hinge release system where the hinge piston and release unit form an integrated unit, as described above, is previously known through EP1659037, which is disclosing the method and device according to the preambles of claims 1 and 5 respectively.

EP1659037 relates to a releasable hinge for securing a bonnet to a vehicle. The releasable hinge comprising: a base portion; a first member pivotally secured to the base portion at one end and a pair of members at the other end, a first one of the pair of members being pivotally secured to the base portion and a second one of the pair of members being pivotally secured to the first member at one end and the other end of the second one of the pair of members is configured to be pivotally secured to the bonnet.

In EP1659037 a release mechanism is provided for releasably securing the first member and the pair of members to the base portion, wherein the first member and the first one of the pair of members are able to pivot from a first position to a second position with respect to the base portion and the second one of the pair of members is able to pivot with respect to the first member and the first one of the pair of members after the release mechanism has been activated.

The release mechanism of EP1659037 comprises an integrated release bolt configured to be manipulated from a locking position to an unlocking position wherein the integrated release bolt prevents the first member and the first one of the pair of members from pivoting to the second position when the integrated release bolt is in the locking position. The release mechanism further comprises a pyrotechnically activated device for providing an activation force to the integrated release bolt in order move the integrated release bolt from the locking position to the unlocking position.

Operation of exemplary embodiments of EP1659037 are contemplated as follows, during normal (no-crash) operations, the bonnet is in its normal position. The releasable hinges remain engaged with the vehicle structure through the use of the integrated release bolt. At occupant contact with the front bumper, a signal is transmitted by the detection sensor to the controller which then activates the pyrotechnic device. This device is then used to push the integrated release bolt out which will disengage the bonnet along with the hinges from the vehicle structure connection and results in releasing of the hinge. Once the hinges are released, the bonnet is lifted upwards at the rear edge through a separate lift mechanism or a lift mechanism that comprises a portion of the releasable hinge. The motion is assisted through a telescoping spring release system and/or compressed gas or a pyrotechnic lift mechanism.

However, the exchange of a transport piston in the factory C-shop and exchanging it with a release unit having an integrated hinge piston creates a number of quality risks during assembly as well as during the service life of the hinge system. A first risk is the risk of damaging the integrity of the applied paint and or coating layers, which further to potentially being aesthetically unfortunate may result in the occurrence of potentially damaging corrosion. A further risk is the risk of incorrect assembly during the process of replacing the transport piston with the release unit integrated hinge piston. A third risk is the risk of not being able to maintain a preset geometry between the bonnet and the surrounding body structures of the vehicle.

### Summary of the invention

One object of the invention is to provide an improved method of providing a bonnet hinge mechanism for a deployable bonnet system in a vehicle allowing for lifting of the bonnet to increase deformation distance to engine bay components in case of a detected or predicted impact with a pedestrian, for avoiding or at least mitigating the problems described above.

This object is achieved by the method as claimed in claim 1.

Thanks to the provision of a method of providing a bonnet hinge mechanism for a deployable bonnet system in a vehicle allowing for lifting of the bonnet to increase deformation distance to engine bay components in case of a detected or predicted impact with a pedestrian where the bonnet hinge comprises at least two members for effecting the lifting through relative pivotational movement, which members are pivotally secured to each other and interconnected by a releasable hinge piston which inhibit relative pivotational motion between the members, wherein the hinge piston at a first end is provided with an interface for receiving a release unit for releasing the hinge piston such that relative pivotational motion between the members for effecting lifting of the bonnet is allowed is provided for a bonnet hinge mechanism that may be arranged at the vehicle body in white during production of the vehicle, with the hinge piston in place, allowing all activities in the production of a vehicle body or shell in a weld shop (A-shop), surface treatment (B-shop) and assembly (C-shop) to be performed with the bonnet hinge mechanism including the hinge piston in place.

A further object of the invention is to provide an improved bonnet hinge mechanism for a deployable bonnet system in a vehicle allowing for lifting of the bonnet to increase deformation distance to engine bay components in case of a detected or predicted impact with a pedestrian, for avoiding or at least mitigating the problems described above.

This object is achieved by the bonnet hinge mechanism as claimed in claim 5.

Thanks to the provision of a bonnet hinge mechanism for a deployable bonnet system in a vehicle allowing for lifting of the bonnet to increase deformation distance to engine bay components in case of a detected or predicted impact with a pedestrian where the bonnet hinge comprises at least two members for effecting the lifting through relative pivotational movement, which members are pivotally secured to each other and interconnected by a releasable hinge piston which inhibit relative pivotational motion between the members, wherein the hinge piston at a first end has an interface for receiving a release unit for releasing the hinge piston such that relative pivotational motion between the members for effecting lifting of the bonnet is allowed is provided a bonnet hinge mechanism that may be arranged at the vehicle body in white during production of the vehicle, with the hinge piston in place, allowing all activities in the production of a vehicle body or shell in a weld shop (A-shop), surface treatment (B-shop) and assembly (C-shop) to be performed with the bonnet hinge mechanism including the hinge piston in place.

Preferred embodiments are listed in the dependent claims.

### Description of drawings

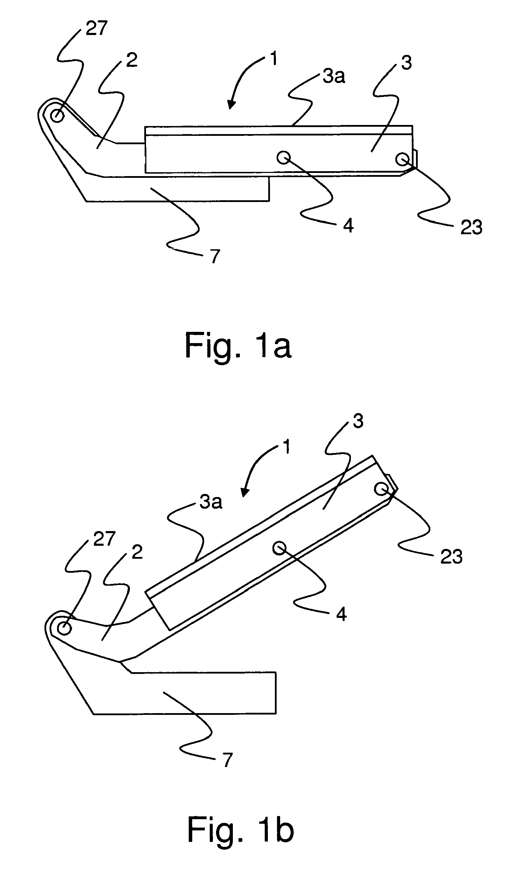

In the following, the invention will be described in greater detail by way of example only with reference to attached drawings, in which
Fig. 1 a illustrates a bonnet hinge mechanism in accordance with one embodiment of the present invention in a position where the bonnet would normally be closed.
Fig. 1 b illustrates a bonnet hinge mechanism in accordance with figure 1 a in a position where the bonnet would normally be open.
Fig. 2a also illustrates a bonnet hinge mechanism in accordance with figure 1 a in a position where the bonnet would normally be closed.
Fig. 2b illustrates a bonnet hinge mechanism in accordance with figure 1 a in a position where lifting of the bonnet to increase deformation distance to engine bay components is performed.
Fig. 3a illustrates an example of a release unit and a hinge piston in an inhibiting position.
Fig. 3b illustrates an example of a release unit and a hinge piston in an allowing position.
Fig. 4a illustrates an example of a release unit and hinge piston that comprises a securing arrangement in the inhibiting position, according to figure 3a.
Fig. 4b illustrates an example of a release unit and hinge piston where the securing arrangement has become dislodged from the hinge piston upon activation of the release unit and subsequent movement of the hinge piston to the allowing position, according to figure 3b.

Still other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not necessarily drawn to scale and that, unless otherwise indicated, they are merely intended to conceptually illustrate the structures and procedures described herein.

### Description of embodiments

The present invention relates to a bonnet hinge mechanism 1 for a deployable bonnet system in a vehicle allowing for lifting of the bonnet to increase deformation distance to engine bay components in case of a detected or predicted impact with a pedestrian.

The present invention also relates to a method of providing a bonnet hinge mechanism 1 for a deployable bonnet system in a vehicle allowing for lifting of the bonnet to increase deformation distance to engine bay components in case of a detected or predicted impact with a pedestrian.

Figures 1 a and 1 b illustrates a bonnet hinge mechanism 1 in accordance with one embodiment of the present invention. The bonnet hinge mechanism 1 comprises a base portion 7, which is normally attached to the vehicle body. A first member 2 is pivotally secured to the base portion 7 at one end 27 thereof and pivotally secured to a second member 3 at the other end 23 thereof. The second member 3 is secured to and carries the hood along an extension 3a thereof. The first 2 and second 3 members are, at a location separated from the pivotal interconnection there between 23, provided with openings 2b, 3b. When the first 2 and second 3 members are positioned substantially parallel to each other the openings 2b, 3b overlap such that a hinge piston 4 may be received in these openings 2b, 3b in order to interconnect the first 2 and second 3 members. This interconnection between the first 2 and second 3 members is such that relative pivotational motion between the first 2 and second 3 member is inhibited.

In figure 1 a the bonnet hinge mechanism 1 is illustrated in a position where the bonnet (not shown) would normally be closed, and in figure 1b the bonnet hinge mechanism 1 is illustrated in a position where the bonnet would normally be open.

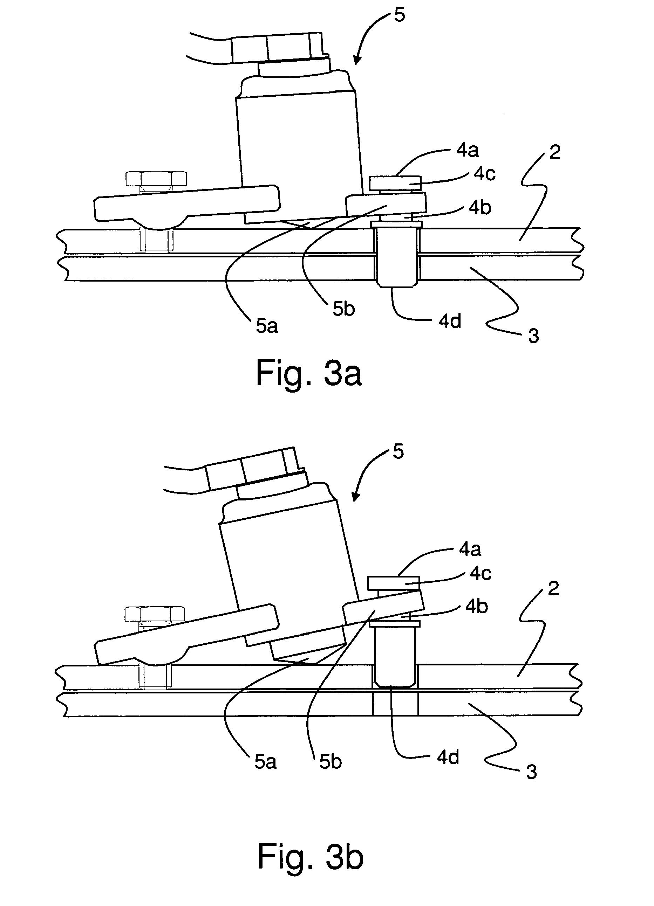

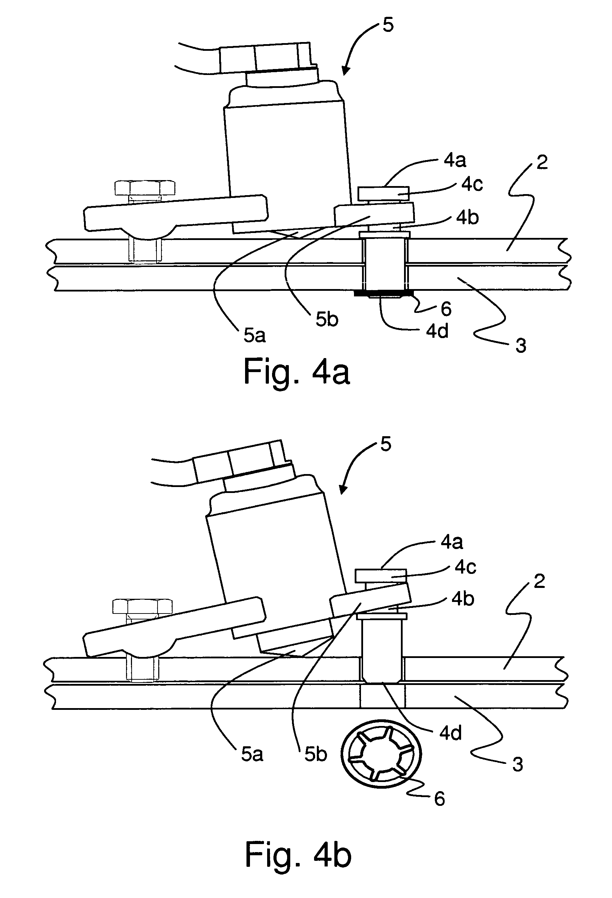

In order to allow for lifting of the bonnet to increase deformation distance to engine bay components in case of a detected or predicted impact with a pedestrian the bonnet hinge comprises at least two members 2, 3 for effecting the lifting through relative pivotational movement. The members 2, 3 are pivotally secured to each other and interconnected by a releasable hinge piston 4 which inhibit relative pivotational motion between the members 2, 3, such that normal operation of the bonnet hinge mechanism for opening and closing of the bonnet in accordance with figures 1 a and 1 b, is ensured with the hinge piston 4 in place. The hinge piston 4 at a first end 4a (see e.g. figs. 3a, 3b, 4a and 4b) has an interface for receiving a release unit 5 for affecting releasing of the hinge piston 4 such that relative pivotational motion between the members 2, 3 for effecting lifting of the bonnet is allowed.

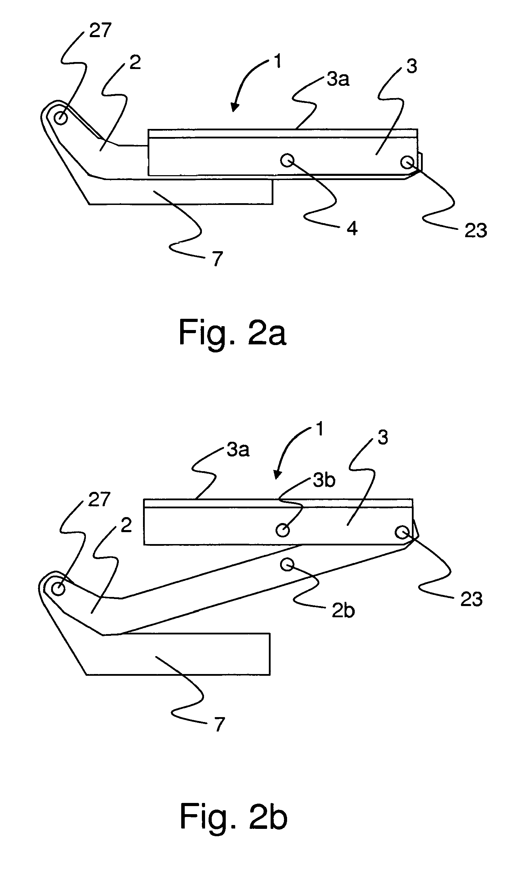

In figure 2a the bonnet hinge mechanism 1 is illustrated in a position where the bonnet (not shown) would normally be closed and no lifting of the bonnet to increase deformation distance to engine bay components is performed. In figure 2b the bonnet hinge mechanism 1 is illustrated in a position where lifting of the bonnet to increase deformation distance to engine bay components, upon release of the hinge piston 4, has been performed.

An example of release unit 5 is illustrated in figures 3a, 3b, 4a and 4b. This release unit 5 comprises a pyrotechnically activated device pivotally attached to the first member 2 and having a lifting piston 5a in contact with the first member 2 for providing, as the lifting piston 5a is forced outward of the release unit 5, an activation force to the hinge piston 4 interface in order move the hinge piston 4 from an inhibiting position, according to figures 3a, 4a to an allowing position, according to figures 3b, 4b. The pyrotechnically activated device may be activated in response to a signal received from a sensor that is configured and positioned to detect or predict an impact with a pedestrian. Lifting of the bonnet to increase deformation distance to engine bay components in case of a detected or predicted impact with a pedestrian may also be activated in response to a signal received from this sensor, and a pyrotechnically activated device, a compressed gas device, a preloaded spring device or similar used to effect lifting of the bonnet upon activation. Alternative means for effecting lifting of the bonnet are well known to the person skilled in the art, why such means are not descried further herein.

In figures 3a, 3b, 4a and 4b one embodiment of an interface for receiving the release unit 5 comprises a hinge piston section 4b adapted to receive a complementary release unit section 5b. The hinge piston section 4b and the release unit section 5b have complementary shapes such that the release unit section 5b upon activation of the release unit 5 can affect the hinge piston 4 to move in a direction of the first end 4a thereof, i.e. from the inhibiting position, according to figures 3a, 4a to the allowing position, according to figures 3b, 4b, releasing the interconnection between the at least two members 2, 3 and thus allowing uplifting of the bonnet.

As illustrated in figures 3a, 3b, 4a and 4b the interface for receiving the release unit 5 may comprise a hinge piston section 4b having a reduced diameter compared to a section 4c closer to the hinge piston first end 4a such that the reduced diameter section 4b is adapted to receive a fork shaped release unit section 5b gripping the hinge piston 4 thereabout.

In an alternative embodiment (not shown) the interface for receiving the release unit 5 may comprise a hinge piston section having a through passage adapted to receive a complementary shaped release unit section therein.

In order to ensure that the hinge piston 4 remains in place during the service life of the bonnet hinge mechanism 1 the hinge piston 4 may, as illustrated in figure 4a, at a second end 4d thereof, further comprise a securing arrangement 6 that is arranged to become dislodged from the hinge piston 4 upon activation of the release unit 5 and subsequent movement of the hinge piston 4 from the inhibiting position, according to figure 4a to the allowing position, according to figure 4b.

In one embodiment, as illustrated in figures 4a, 4b the securing arrangement 6 is a star lock washer arranged at the second end 4d of the hinge piston 4. The star lock washer 6 has, as illustrated in figure 4b, become dislodged from the hinge piston 4 upon activation of the release unit 5 and subsequent movement of the hinge piston 4 from the inhibiting position, according to figure 4a to the allowing position, according to figure 4b.

The securing arrangement 6 may also be arranged to function as an activation indicator, i.e. indicating that the deployable bonnet system has been activated, through not being present at the second end 4d of the hinge piston 4.

In the following will be described in further detail the method of providing a bonnet hinge mechanism 1 for a deployable bonnet system in a vehicle allowing for lifting of the bonnet to increase deformation distance to engine bay components in case of a detected or predicted impact with a pedestrian where the bonnet hinge comprises at least two members 2, 3 for effecting the lifting through relative pivotational movement, which members 2, 3 are pivotally secured to each other and interconnected by a releasable hinge piston 4 which inhibit relative pivotational motion between the members 2, 3.

In accordance with the method the hinge piston 4, at a first end 4a, is provided with an interface for receiving a release unit 5 for releasing the hinge piston 4 such that relative pivotational motion between the members 2, 3 for effecting lifting of the bonnet is allowed. In one embodiment of the method, the step of providing the interface for receiving a release unit 5 comprises providing the hinge piston 4 with a section 4b adapted to receive a complementary release unit section 5b. This section 4b should be provided such that the release unit section 5b can affect the hinge piston 4 to move in a direction of the first end 4a thereof, i.e. from the inhibiting position, according to figures 3a, 4a to the allowing position, according to figures 3b, 4b, for releasing the interconnection between the at least two members (2, 3).

In a further embodiment, as illustrated in figures 3a, 3b, 4a and 4b, the step of providing the interface for receiving a release unit 5 comprises providing the hinge piston 4 with a section 4b having a reduced diameter compared to a section 4c closer to the hinge piston first end 4a such that the reduced diameter section 4b is adapted to receive a fork shaped release unit section 5b gripping the hinge piston 4 thereabout.

In an alternative embodiment (not shown) the step of providing the interface for receiving a release unit 5 comprises providing the hinge piston 4 with a section having a through passage adapted to receive a complementary shaped release unit section therein.

In order to ensure that the hinge piston 4 remains in place during the service life of the bonnet hinge mechanism 1 the method according to yet an embodiment further embodiment comprises the step of providing the hinge piston 4 at a second end 4d with a securing arrangement 6 that is arranged to become dislodged from the hinge piston 4 upon activation of the release unit 5 and subsequent movement of the hinge piston 4 from the inhibiting position, according to figure 4a to the allowing position, according to figure 4b.

In a still further embodiment the method step of providing the hinge piston 4 at a second end 4d with a securing arrangement 6 comprises providing a star lock washer 6 at the second end 4d of the hinge piston 4. The star lock washer 6 has, as illustrated in figure 4b, become dislodged from the hinge piston 4 upon activation of the release unit 5 and subsequent movement of the hinge piston 4 from the inhibiting position, according to figure 4a to the allowing position, according to figure 4b.

In an additional embodiment, as illustrated in figures 1a, 1 b, 2a and 2b, the method further comprises the steps of: providing a base portion 7; providing a first member 2 such that it is pivotally secured to the base portion 7 at one end 27 and such that it is pivotally secured to a second member 3 at the other end 23, and securing the second member 3 to the hood along an extension 3a thereof; providing the first 2 and second 3 members, at a location separated from the pivotal interconnection there between 23, with openings 2b, 3b which when the first 2 and second 3 members are positioned substantially parallel to each other overlap such that the hinge piston 4 may be received in theses openings 2b, 3b in order to interconnect the first 2 and second 3 members such that relative pivotational motion between the first 2 and second 3 member is inhibited.

The present invention also relates to an automotive vehicle comprising a bonnet hinge mechanism 1 as described above.

Thus, in accordance with the present invention is provided a bonnet hinge mechanism 1 that may be arranged at the vehicle body in white during production of the vehicle, with the hinge piston 4 in place, and optionally also secured to remain in place by the securing arrangement 6. Thus all activities in the production of a vehicle body or shell in a weld shop (A-shop), surface treatment (B-shop) and assembly (C-shop) may be performed with the bonnet hinge mechanism 1 including the hinge piston 4 in place and the release unit 5 being mounted to the bonnet hinge mechanism 1 only as the vehicle body reaches assembly (C-shop). Hereby a number of advantages as compared to the prior art solutions are achieved, including but not limited to: the risk of damaging the integrity of the applied paint and or coating layers is eliminated, and thereby also the risk of potentially damaging corrosion occurring; the risk of incorrect assembly during the process of replacing a transport piston with a release unit integrated hinge piston is eliminated, ant thereby also any associated problems with tolerances resulting there from; the risk of not being able to maintain a preset geometry between the bonnet and the surrounding body structures of the vehicle is also eliminated; the risk of incorrect mounting is also eliminated, resulting in quality assurance; production and assembly time may be reduced; a reduced number of articles has to be kept in inventory, both during production and as spare parts for the aftermarket; only one variety may be used, both during production and as spare parts for the aftermarket, as the bonnet hinge mechanism 1 will function normally without a release unit 5 for market segments without a deployable bonnet system.

The invention is not limited to the above-described embodiments, but may be varied within the scope of the following claims.

Thus, while there have been shown and described and pointed out fundamental novel features of the invention as applied to a preferred embodiment thereof, it will be understood that various omissions and substitutions and changes in the form and details of the devices illustrated, and in their operation, may be made by those skilled in the art. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

## Claims

1. A method of providing a bonnet hinge mechanism (1) for a deployable bonnet system in a vehicle allowing for lifting of the bonnet to increase deformation distance to engine bay components in case of a detected or predicted impact with a pedestrian where the bonnet hinge comprises at least two members (2, 3) for effecting the lifting through relative pivotational movement, which members (2, 3) are pivotally secured to each other and interconnected by a releasable hinge piston (4) which inhibit relative pivotational motion between the members (2, 3),
**characterised in that**
the hinge piston (4) at a first end (4a) is provided with an interface for receiving a release unit (5) having a fork shaped section (5B) for releasing the hinge piston (4) such that relative pivotational motion between the members (2, 3) for effecting lifting, of the bonnet is allowed where the step of providing the interface for receiving the fork shaped release unit section (5b) comprises providing the hinge piston (4) with a section (4b) having a reduced diameter compared to a section (4c) closer to the hinge piston first end (4a) such that the reduced diameter section (4b) is adapted to receive the fork shaped release unit section (5b) gripping the hinge piston (4) thereabout.

2. A method according to claim 1,
**characterized in that**:
it further comprises the step of providing the hinge piston (4) at a second end (4d) with a securing arrangement (6) that is arranged to become dislodged from the hinge piston (4) upon activation of the release unit (5).

3. A method according to any one of claims 1 to 2,
**characterized in that**:
the step of providing the hinge piston (4) at a second end (4d) with a securing arrangement (6) comprises providing a star lock washer (6) at the second end (4d) of the hinge piston (4).

4. A method according to any one of claims 1 to 3,
**characterized in that**:
it further comprises the steps of:
providing a base portion (7);
providing a first member (2) such that it is pivotally secured to the base portion (7) at one end (27) and such that it is pivotally secured to a second member (3) at the other end (23), and
securing the second member (3) to the hood along an extension (3a) thereof; providing the first (2) and second (3) members, at a location separated from the pivotal interconnection there between (23), with openings (2b, 3b) which when the first (2) and second (3) members are positioned substantially parallel to each other overlap such that the hinge piston (4) may be received in theses openings (2b, 3b) in order to interconnect the first (2) and second (3) members such that relative pivotational motion between the first (2) and second (3) member is inhibited.

5. A bonnet hinge mechanism (1) for a deployable bonnet system in a vehicle allowing for lifting of the bonnet to increase deformation distance to engine bay components in case of a detected or predicted impact with a pedestrian where the bonnet hinge comprises at least two members (2, 3) for effecting the lifting through relative pivotational movement, which members (2, 3) are pivotally secured to each other and interconnected by a releasable hinge piston (4) which inhibit relative pivotational motion between the members (2, 3),
**characterised in that** the hinge piston (4) at a first end (4a) has an interface receiving a fork shaped section (5b) of a release unit (5) for releasing the hinge piston (4) such that relative pivotational motion between the members (2, 3),for effecting lifting of the bonnet is allowed where the interface for receiving the fork shaped release unit section (5) comprises a hinge piston section (4b) having a reduced diameter compared to a section (4c) closer to the hinge piston first end (4a) such that the reduced diameter section (4b) receives the fork shaped release unit section (5b) gripping the hinge piston (4) thereabout.

6. A bonnet hinge mechanism (1) according to claim 5,
**characterized in that**:
the hinge piston (4) at a second end (4d) further comprises a securing arrangement (6) that is arranged to become dislodged from the hinge piston (4) upon activation of the release unit (5).

7. A bonnet hinge mechanism according to claim 6,
**characterized in that**:
the securing arrangement (6) is a star lock washer arranged at the second end (4d) of the hinge piston (4).

8. A bonnet hinge mechanism (1) according to any one of claims 5 to 7,
**characterized in that**:
the bonnet hinge mechanism (1) further comprises:
a base portion (7);
a first member (2) pivotally secured to the base portion (7) at one end (27) and pivotally secured to a second member (3) at the other end (23), and the second member (3) secured to the hood along an extension (3a) thereof;
the first (2) and second (3) members, at a location separated from the pivotal interconnection there between (23), being provided with openings (2b, 3b) which when the first (2) and second (3) members are positioned substantially parallel to each other overlap such that the hinge piston (4) may be received in these openings (2b, 3b) in order to interconnect the first (2) and second (3) members such that relative pivotational motion between the first (2) and second (3) member is inhibited.

9. An automotive vehicle, **characterized in that** it comprises a bonnet hinge mechanism (1) according to any one of claims 5 to 8.

## Patentansprüche

1. Verfahren zum Bereitstellen eines Motorhauben-Scharniermechanismus (1) für ein ausfahrbares Motorhaubensystem in einem Fahrzeug, das es erlaubt, die Motorhaube zu heben, um die Verformungsentfernung zu Motorraumbestandteilen in dem Fall eines erfassten oder vorausgesagten Aufpralls mit einem Fußgänger zu erhöhen, wobei das Motorhaubenscharnier mindestens zwei Elemente (2, 3) zum Ausführen des Hebens durch eine relative Schwenkbewegung aufweist, wobei die Elemente (2, 3) schwenkend aneinander befestigt und durch einen freigebbaren Scharnierkolben (4) verbunden sind, der relative Schwenkbewegung zwischen den Elementen (2, 3) verhindert,
**dadurch gekennzeichnet, dass**
der Scharnierkolben (4) an einem ersten Ende (4a) mit einer Schnittstelle zum Aufnehmen einer Freigabeeinheit (5), die einen gabelförmigen Abschnitt (5b) hat, versehen ist, um den Scharnierkolben (4) derart freizugeben, dass relative Schwenkbewegung zwischen den Elementen (2, 3) zum Ausführen des Hebens der Motorhaube erlaubt wird, wobei der Schritt des Bereitstellens der Schnittstelle zum Aufnehmen des gabelförmigen Freigabeeinheitabschnitts (5b) das Versehen des Scharnierkolbens (4) mit einem Abschnitt (4b) aufweist, der einen verringerten Durchmesser im Vergleich zu einem Abschnitt (4c) näher an dem ersten Ende (4a) des Scharnierkolbens hat, so dass der Abschnitt (4b) mit verringertem Durchmesser angepasst ist, um den gabelförmigen Freigabeeinheitabschnitt (5b), der den Scharnierkolben (4) darum fasst, aufzunehmen.

2. Verfahren nach Anspruch 1,
**dadurch gekennzeichnet, dass**
es ferner den Schritt des Versehens des Scharnierkolbens (4) an einem zweiten Ende (4d) mit einer Befestigungsanordnung (6) aufweist, die eingerichtet ist, um aus dem Scharnierkolben (4) beim Aktivieren der Freigabeeinheit (5) auszutreten.

3. Verfahren nach einem der Ansprüche 1 bis 2,
**dadurch gekennzeichnet, dass**
der Schritt des Versehens des Scharnierkolbens (4) an einem zweiten Ende (4d) mit einer Befestigungsanordnung (6) das Bereitstellen einer Fächersperrscheibe (6) an dem zweiten Ende (4d) des Scharnierkolbens (4) aufweist.

4. Verfahren nach einem der Ansprüche 1 bis 3,
**dadurch gekennzeichnet, dass**:
es ferner die Schritte aufweist des:
Bereitstellens eines Basisabschnitts (7),
Bereitstellens eines ersten Elements (2), so dass es schwenkend an dem Basisabschnitt (7) an einem Ende (27) befestigt ist, und so, dass es an einem zweiten Element (3) an dem anderen Ende (23) schwenkend befestigt ist, und
Befestigens des zweiten Elements (3) an der Haube entlang einer Erweiterung (3a) davon,
Versehens des ersten (2) und zweiten (3) Elements an einer Stelle, die von der Schwenkverbindung dazwischen (23) getrennt ist, mit Öffnungen (2b, 3b), die, wenn das erste (2) und das zweite (3) Element im Wesentlichen zueinander parallel positioniert sind, einander derart überlappen, dass der Scharnierkolben (4) in diesen Öffnungen (2b, 3b) aufgenommen werden kann, um das erste (2) und das zweite (3) Element derart zu verbinden, dass die relative Schwenkbewegung zwischen dem ersten (2) und zweiten (3) Element verhindert wird.

5. Motorhauben-Scharniermechanismus (1) für ein ausfahrbares Motorhaubensystem in einem Fahrzeug, das es erlaubt, die Motorhaube zu heben, um die Verformungsentfernung zu den Motorraumbauteilen in dem Fall eines erfassten oder vorausgesagten Aufpralls mit einem Fußgänger zu erhöhen, wobei das Motorhaubenscharnier mindestens zwei Elemente (2, 3) zum Ausführen des Hebens durch relative Schwenkbewegung aufweist, wobei die Elemente (2, 3) schwenkend aneinander befestigt und durch einen freigebbaren Scharnierkolben (4) verbunden sind, der relative Schwenkbewegung zwischen den Elementen (2, 3) verhindert,
**dadurch gekennzeichnet, dass** der Scharnierkolben (4) an einem ersten Ende (4a) eine Schnittstelle hat, die einen gabelförmigen Abschnitt (5b) einer Freigabeeinheit (5) zum Freigeben des Scharnierkolbens (4) derart aufnimmt, dass die relative Schwenkbewegung zwischen den Elementen (2, 3) zum Ausführen des Hebens der Motorhaube erlaubt wird, wobei die Schnittstelle zum Aufnehmen des gabelförmigen Freigabeeinheitabschnitts (5b) einen Scharnierkolbenabschnitt (4b) aufweist, der einen verringerten Durchmesser im Vergleich zu einem Abschnitt (4c) näher an dem ersten Ende (4a) des Scharnierkolbens hat, so dass der Abschnitt mit verringertem Durchmesser (4b) den gabelförmigen Freigabeeinheitabschnitt (5b), der den Scharnierkolbens (4) darum fasst, aufnimmt.

6. Motorhauben-Scharniermechanismus (1) nach Anspruch 5,
**dadurch gekennzeichnet, dass**:
der Scharnierkolben (4) ferner an einem zweiten Ende (4d) eine Befestigungsanordnung (6) aufweist, die eingerichtet ist, um aus dem Scharnierkolben (4) beim Aktivieren der Freigabeeinheit (5) auszutreten.

7. Motorhauben-Scharniermechanismus nach Anspruch 6,
**dadurch gekennzeichnet, dass**:
die Befestigungsanordnung (6) eine Federsperrscheibe ist, die an dem zweiten Ende (4d) des Scharnierkolbens (4) eingerichtet ist.

8. Motorhauben-Scharniermechanismus (1) nach einem der Ansprüche 5 bis 7,
**dadurch gekennzeichnet, dass**:
der Motorhauben-Scharniermechanismus (1) ferner Folgendes aufweist:
einen Basisabschnitt (7),
ein erstes Element (2), das schwenkend an dem Basisabschnitt (7) an einem Ende (27) befestigt ist und schwenkend an einem zweiten Element (3) an dem anderen Ende (23) befestigt ist, wobei das zweite Element (3) an der Motorhaube entlang einer Erweiterung (3a) davon befestigt ist,
das erste (2) und zweite (3) Element an einer Stelle, die von der Schwenkverbindung dazwischen (23) getrennt ist, mit Öffnungen (2b, 3b) versehen sind, die, wenn das erste (2) und das zweite (3) Element im Wesentlichen parallel zueinander positioniert sind, derart überlappen, dass der Scharnierkolben (4) in diesen Öffnungen (2b, 3b) aufgenommen werden kann, um das erste (2) und das zweite (3) Element derart zu verbinden, dass die relative Schwenkbewegung zwischen dem ersten (2) und zweiten (3) Element verhindert wird.

9. Kraftfahrzeug, **dadurch gekennzeichnet, dass** es einen Motorhauben-Scharniermechanismus (1) nach einem der Ansprüche 5 bis 8 aufweist.

## Revendications

1. Procédé pour fournir un mécanisme (1) de charnière de capot pour un système de capot déployable dans un véhicule, permettant le soulèvement du capot pour augmenter la distance de déformation par rapport à des composants d'un compartiment moteur en cas d'impact détecté ou prédit avec un piéton, dans lequel la charnière de capot comprend au moins deux organes (2, 3) pour effectuer le soulèvement par un mouvement de pivotement relatif, lesquels organes (2, 3) sont fixés de manière pivotante l'un à l'autre et sont interconnectés par un piston de charnière (4) pouvant être relâché qui empêche le mouvement de pivotement relatif entre les organes (2, 3),
**caractérisé en ce que**
le piston de charnière (4) à une première extrémité (4a) est pourvu d'une interface pour recevoir une unité de relâchement (5) ayant une section en forme de fourche (5b) pour relâcher le piston de charnière (4) de telle sorte que le mouvement de pivotement relatif entre les organes (2, 3) pour effectuer le soulèvement du capot soit permis quand l'étape consistant à fournir l'interface pour recevoir la section (5b) en forme de fourche de l'unité de relâchement comprend le fait de munir le piston de charnière (4) d'une section (4b) ayant un diamètre réduit par rapport à une section (4c) plus proche de la première extrémité (4a) du piston de charnière, de telle sorte que la section de diamètre réduit (4b) soit prévue pour recevoir la section d'unité de relâchement (5b) en forme de fourche s'engageant autour du piston de charnière (4).

2. Procédé selon la revendication 1,
**caractérisé en ce**
**qu'**il comprend en outre l'étape consistant à munir le piston de charnière (4) à une deuxième extrémité (4d) d'un agencement de fixation (6) qui est prévu pour se détacher du piston de charnière (4) lors de l'activation de l'unité de relâchement (5).

3. Procédé selon l'une quelconque des revendications 1 à 2,
**caractérisé en ce que**
l'étape consistant à munir le piston de charnière (4) à une deuxième extrémité (4d) d'un agencement de fixation (6) comprend la fourniture d'une rondelle de verrouillage stellaire (6) au niveau de la deuxième extrémité (4d) du piston de charnière (4).

4. Procédé selon l'une quelconque des revendications 1 à 3,
**caractérisé en ce**
**qu'**il comprend en outre les étapes consistant à :
fournir une portion de base (7) ;
fournir un premier organe (2) de telle sorte qu'il soit fixé de manière pivotante à la portion de base (7) à une extrémité (27) et qu'il soit fixé de manière pivotante à un deuxième organe (3) à l'autre extrémité (23), et
fixer le deuxième organe (3) au capot le long d'une extension (3a) de celui-ci ;
munir les premier (2) et deuxième (3) organes, en un emplacement séparé de l'interconnexion pivotante entre eux (23), d'ouvertures (2b, 3b) qui, lorsque les premier (2) et deuxième (3) organes sont positionnés substantiellement parallèlement l'un à l'autre, se chevauchent de telle sorte que le piston de charnière (4) puisse être reçu dans ces ouvertures (2b, 3b) afin d'interconnecter les premier (2) et deuxième (3) organes de telle sorte que le mouvement de pivotement relatif entre le premier (2) et le deuxième (3) organe soit inhibé.

5. Mécanisme de charnière (1) pour capot, pour un système de capot déployable dans un véhicule, permettant le soulèvement du capot pour augmenter la distance de déformation par rapport à des composants d'un compartiment moteur en cas d'impact détecté ou prédit avec un piéton, dans lequel la charnière de capot comprend au moins deux organes (2, 3) pour effectuer le soulèvement par un mouvement de pivotement relatif, lesquels organes (2, 3) sont fixés de manière pivotante l'un à l'autre et sont interconnectés par un piston de charnière (4) pouvant être relâché qui empêche le mouvement de pivotement relatif entre les organes (2 3),
**caractérisé en ce que** le piston de charnière (4) présente à une première extrémité (4a) une interface recevant une section (5b) en forme de fourche d'une unité de relâchement (5) pour relâcher le piston de charnière (4) de telle sorte que le mouvement de pivotement relatif entre les organes (2, 3) pour effectuer le soulèvement du capot soit permis quand l'interface pour recevoir la section (5b) en forme de fourche de l'unité de relâchement comprend une section de piston de charnière (4b) ayant un diamètre réduit par rapport à une section (4c) plus proche de la première extrémité (4a) du piston de charnière, de telle sorte que la section de diamètre réduit (4b) reçoive la section d'unité de relâchement (5b) en forme de fourche s'engageant autour du piston de charnière (4).

6. Mécanisme de charnière (1) pour capot selon la revendication 5,
**caractérisé en ce que**
le piston de charnière (4), à une deuxième extrémité (4d), comprend en outre un agencement de fixation (6) qui est prévu pour se détacher du piston de charnière (4) lors de l'activation de l'unité de relâchement (5).

7. Mécanisme de charnière (1) pour capot selon la revendication 6,
**caractérisé en ce que**
l'agencement de fixation (6) est une rondelle de verrouillage stellaire disposée au niveau de la deuxième extrémité (4d) du piston de charnière (4).

8. Mécanisme de charnière (1) pour capot selon l'une quelconque des revendications 5 à 7,
**caractérisé en ce que**
le mécanisme de charnière (1) pour capot comprend en outre :
une portion de base (7) ;
un premier organe (2) fixé de manière pivotante à la portion de base (7) à une extrémité (27) et fixé de manière pivotante à un deuxième organe (3) à l'autre extrémité (23), et le deuxième organe (3) étant fixé au capot le long d'une extension (3a) de celui-ci ;
les premier (2) et deuxième (3) organes, en un emplacement séparé de l'interconnexion pivotante entre eux (23), étant munis d'ouvertures (2b, 3b) qui, lorsque les premier (2) et deuxième (3) organes sont positionnés substantiellement parallèlement l'un à l'autre, se chevauchent de telle sorte que le piston de charnière (4) puisse être reçu dans ces ouvertures (2b, 3b) afin d'interconnecter les premier (2) et deuxième (3) organes de telle sorte que le mouvement de pivotement relatif entre le premier (2) et le deuxième (3) organe soit inhibé.

9. Véhicule automobile, **caractérisé en ce qu'**il comprend un mécanisme de charnière pour capot (1) selon l'une quelconque des revendications 5 à 8.
